# EUROPEAN PATENT SPECIFICATION

(11) **EP 3 922 228 B1**
(45) Date of publication and mention of the grant of the patent: **06.12.2023**
(21) Application number: 21173596.4
(22) Date of filing: 12.05.2021
(51) Int. Cl.: A61G 5/12, A47C 7/38, B60N 2/806, A61G 3/08

(54) **A SUPPORT CUSHION FOR USE IN A VEHICLE**
STÜTZKISSEN ZUR VERWENDUNG IN EINEM FAHRZEUG
COUSSIN DE SUPPORT DESTINÉ À ÊTRE UTILISÉ DANS UN VÉHICULE

(30) Priority: 11.06.2020 GB 202008898
(43) Date of publication of application: 15.12.2021
(73) Proprietor: NMI Safety Systems Ltd, Stevenage, Hertfordshire SG1 2BD (GB)
(72) Inventor: SAWDY, Michael, Swaffham, PE37 7EU (GB)
(74) Representative: Forresters IP LLP

(56) References cited:
- WO-A1-2013/102735
- JP-U- S6 070 349
- US-A1- 2017 224 117

## Description

This invention relates to a support cushion for use in a vehicle, and in particular concerns a cushion which is adapted to support the head and/or back of a wheelchair user within a vehicle.

There are many instances in which a vehicle will need to be adapted quickly and safely to accommodate a passenger in a wheelchair. An example of this is an ambulance. For most journeys, there will be no wheelchair user within the ambulance, and the space in the rear of the ambulance needs to be kept as clear as possible. However, when a wheelchair user does need to ride in the back of the ambulance, the space needs to be adapted quickly so that the wheelchair user can be supported and protected while the ambulance is in motion.

Known systems of this type include an arm which, in a first mode, is stowed as unobtrusively as possible, for instance near or against an inside wall of the ambulance. When a wheelchair user is to be accommodated within the ambulance, the arm swings or pivots into the internal space of the ambulance, carrying a back/headrest which can be locked in place. The back and/or head of the wheelchair user can then be supported by the cushion while the ambulance is in motion.

It is an object of the invention to provide an improved system of this type. JPS6070349 discloses a headrest with a base cushion, and two hinged cushions which overlie the base cushion in a first configuration, and pivot outwardly therefrom in a second configuration to support the sides of a user's head.

WO2013/102735 discloses a seat headrest comprising: a central fixed part including a rigid metal frame linked to the backrest of the seat, and a mobile supporting part mounted on the central fixed part and including a fixed cushion and a mobile cushion. The headrest is characterised in that the mobile supporting part is rotatably mounted on the central fixed part such that it can move between: a stowed position in which the headrest performs its normal function, and a rest position in which the mobile cushion is unfolded, thereby revealing the fixed cushion of the mobile part, in order to support the side of the user's head.

US2017/224117 discloses an adjustable head support includes an articulating arm that has a plurality of members, at least one of the members is attached to a consecutive member and configured to rotate about a first axis. At least another of the members is attached to a consecutive member and configured to rotate about a second axis, the first axis and the second axis being perpendicular. A head support assembly is pivotally coupled to the articulating arm.

Accordingly, one aspect of the present invention provides a cushion arrangement, comprising: a first cushion having a planar or substantially planar support surface; and a second cushion having a planar or substantially planar support surface, the second cushion being repeatedly movable between a first configuration and a second configuration, and may be selectively locked in the first configuration and the second configuration, wherein the second cushion is formed in two parts each of which has a support surface and which take the form of an upper part and a lower part, and wherein: in the first configuration, the support surface of the upper part of the second cushion lies above, and in a plane that is offset from that of, the support surface of the first cushion; and in the second configuration, the support surface of the upper part of the second cushion lies above, and in the same or substantially the same plane as that of, the support surface of the first cushion, and the support surface of the lower part of the second cushion lies below, and in the same or substantially the same plane as the support surface of, the first cushion so that the first and second cushions present a front surface that is generally co-planar.

Advantageously, in the first configuration, the second cushion lies in front of the first cushion, so that when the first cushion is viewed along an axis which is substantially perpendicular to the plane of its support surface, the support surface of the second cushion at least partially overlaps the support surface of the first cushion.

Preferably, in the first configuration, when the first cushion is viewed along an axis which is substantially perpendicular to the plane of its support surface, the support surface of the second cushion substantially completely partially overlaps the support surface of the first cushion.

Advantageously, in the first configuration, the two parts abut each other so that the support surfaces thereof are contiguous with each other and form the support surface of the second cushion.

Preferably, in the second configuration, the two parts are separate from each other, and the support surface of each of the parts lies in the same or substantially the same plane that as that of the support surface of the first cushion.

Conveniently, in the second configuration, the two parts lie on generally opposite sides of the first cushion.

Advantageously, the second cushion is connected to the first cushion by at least one support arm.

Preferably, a first end of the support arm is attached to the first cushion, by a connection mechanism that allows the first end of the support arm to be rotationally locked in place with respect to the first cushion in at least two different positions.

Conveniently, in a first of the two positions, the second cushion is held in an appropriate position to be in the first configuration, and in a second of the two positions, the second cushion is held in an appropriate position to be in the second configuration.

Advantageously, the connection mechanism includes a spring-biased connection pin, which may move between an engaged position and a withdrawn position, which is biased into the engaged position, and which may pass through either one of two connection holes formed in the first end of the support arm to lock the support arm in the first and second positions, respectively.

Preferably, a second end of the support arm is attached to the second cushion, by a connection mechanism that allows the second end of the support arm to be rotationally locked in place with respect to the second cushion in at least two different positions.

Conveniently, in a first of the two positions, the second cushion is held in an appropriate rotational orientation to be in the first configuration, and in a second of the two positions, the second cushion is held in an rotational orientation to be in the second configuration.

Advantageously, the connection mechanism includes a spring-biased connection pin, which may move between an engaged position and a withdrawn position, which is biased into the engaged position, and which may pass through either one of two connection holes formed in the second end of the support arm to lock the support arm in the first and second positions, respectively.

Preferably, the first and second cushions are independently connected to one or more supporting structures.

Another aspect of the present invention provides a vehicle having a cushion arrangement according to any of the previous embodiments.

Conveniently, the cushion arrangement is mounted on a support arm which may move between a retracted position, in which the cushion arrangement is held relatively close to an internal wall of the vehicle, and a deployed position, in which the cushion arrangement is held further away from the internal wall of the vehicle, in an internal space within the vehicle.

In order that the invention may be more readily understood, embodiments therefore will therefore now be described, by way of example, with reference to the accompanying figures in which:
Figures 1-3 show a cushion arrangement embodying the present invention in a first configuration;
Figures 4-6 show the cushion arrangement of figures 1-3 in a second configuration; and
Figure 7-9 show further detail of a locking arrangement of the cushion arrangement of figures 1-3.

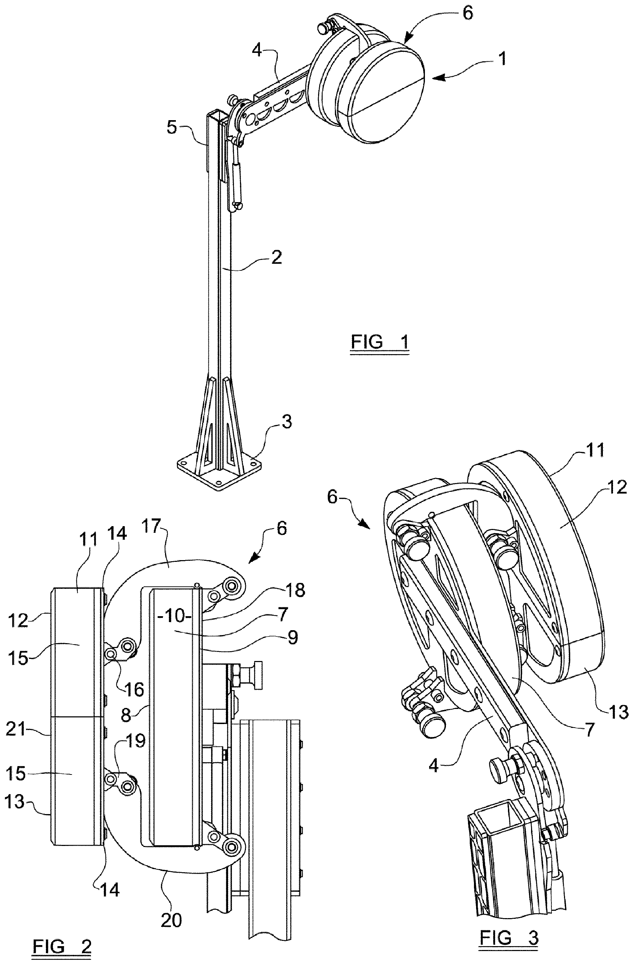

Referring firstly to figure 1, a support system 1 is shown. The support system 1 includes a generally vertical pillar 2, which has an attachment plate 3 at its lower end to attach the pillar to a floor, for instance the floor of a vehicle (not shown). A support arm 4 is connected to the pillar 2 at or near its top end 5.

It is envisaged that the support arm 4 may be pivotally connected to the pillar 2. In an inactive state, the support arm 4 may extend downwards generally vertically from its connection with the pillar 2. However, in the configuration shown in figure 1 the support arm 4 extends generally horizontally outwardly, substantially at right angles to the pillar 2. When the support system 1 is installed in a vehicle, in this configuration the free end of the arm 4 may protrude into a central region of an internal space of the vehicle (for instance, an internal region of the rear of an ambulance).

At its free end, the support arm 4 carries a cushion arrangement 6, which is the focus of the present invention.

The cushion arrangement 6 is shown in more detail in figures 2 and 3 in an undeployed configuration.

The cushion arrangement 6 comprises a first cushion 7, which in the example shown is generally circular in shape. The first cushion 7 preferably has a generally planar front surface 8.

In the example shown, the first cushion 7 has a rigid back plate 9, which is preferably formed from a rigid material such as steel. A cushion element 10 is attached to a front face of the support plate 9, and may be formed from expanded foam, rubber, or any other suitable material, as will be understood by one of skill in the art. The cushion element 10 may have a suitable cover, for instance formed from fabric or upholstery.

In preferred embodiments the cushion element 10 has the same or generally the same cross-sectional shape as the support plate 9.

The first cushion 7 may be rigidly and directly attached to the support arm 4, for instance through the support plate 9 being screwed, bolted, welded or otherwise attached directly to the support arm 4. In other embodiments, however, the first cushion 7 may be able to slide along at least a part of the length of the support arm 4, and/or may be removably detachable from the support arm 4.

The cushion arrangement 6 also comprises a second cushion 11. The second cushion 11 is formed in two separate parts, which take the form of an upper part 12 and a lower part 13.

In the example shown in the figures, the second cushion 11 is generally circular in cross section, with the upper and lower parts 12, 13 each having a substantially semi-circular cross-sectional shape.

The construction of each of the upper and lower parts is generally similar to that of the cushion 7, in that a rigid support plate 14, formed from a sturdy material such as steel, has a cushion element 15 attached to a front surface thereof. Once again the cushion elements 15 may be formed from expanded foam, rubber, or any other suitable material, and may be covered with any suitable covering, which for instance may take the form of fabric or upholstery.

In preferred embodiments the cross-sectional shape and size of the second cushion 11 is the same or approximately the same as that of the first cushion 7, when the upper and lower parts 12, 13 of the second cushion 11 are arranged together.

The upper part 12 of the second cushion 11 is carried on a distal end 16 of an upper support arm 17, which is attached at its proximal end to a rear side 18 of the support plate 9 of the first cushion 7.

Similarly, the lower part 13 of the second cushion 11 is carried on the distal end 19 of a lower support arm 20, which is attached to the rear side 18 of a lower side of the rear support plate 9 of the first cushion 7.

The upper and lower support arms 17, 20 will be described in more detail below.

In the undeployed configuration which is shown in figures 2 and 3, the upper and lower support arms 17, 20 hold the upper and lower parts of the second cushion 11 together, so as to form a substantially continuous, planar second support surface 21, which faces generally away from the support arm 4.

In this configuration, the second cushion 11 is positioned generally in front of the first cushion 7. In preferred embodiments the second cushion 11 may be generally aligned with the first cushion 7, although this is not essential.

It will be appreciated that, in the undeployed configuration shown in figures 1, 2 and 3, the upper and lower parts 12, 13 of the second cushion combine to form a support surface 21 which may be used to support the head and/or back of a wheelchair occupant. The upper and lower parts 12, 13 of the second cushion 11 are rigidly (but in this example indirectly) connected to the support arm 4, by way of the support plate 9 of the first cushion 7.

The cushion arrangement 6 may be useful in the undeployed configuration where a wheelchair user requires only a relatively small area of support, for instance if the user has a wheelchair with a relatively rigid back, and requires only head support.

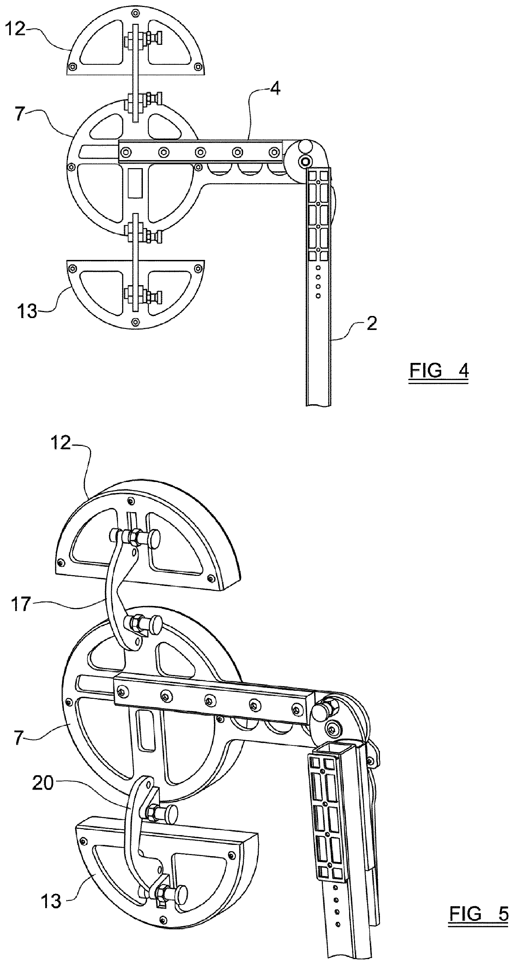

When required, the cushion arrangement 6 can be converted to a deployed configuration, which is shown in figures 4, 5 and 6. As can be seen in these figures, in the deployed configuration of the upper part 12 of the second cushion 11 is, in this example, supported above the first cushion 7, so that the front surface 21 of the upper part of the second cushion 11 is substantially planar with the front surface 8 of the first cushion 7.

Similarly, the lower part 13 of the second cushion 11 is supported so that it is positioned below the first cushion 7, and so that the front surface 21 of the lower part 13 lies in the same plane, or substantially in the same plane, as the front surface 8 of the first cushion 7.

It will therefore be understood that the first cushion 7 and the upper and lower parts 12, 13 of the second cushion 11, when in the deployed configuration, present a spaced-apart arrangement of three cushions, all lying in the same or substantially the same plane. This provides a significantly greater area of support for a wheelchair user, and for example may be useful where a greater degree of support is required, such as when the user has a wheelchair with a relatively soft back, and so the user's back and head need to be supported when the vehicle is in motion.

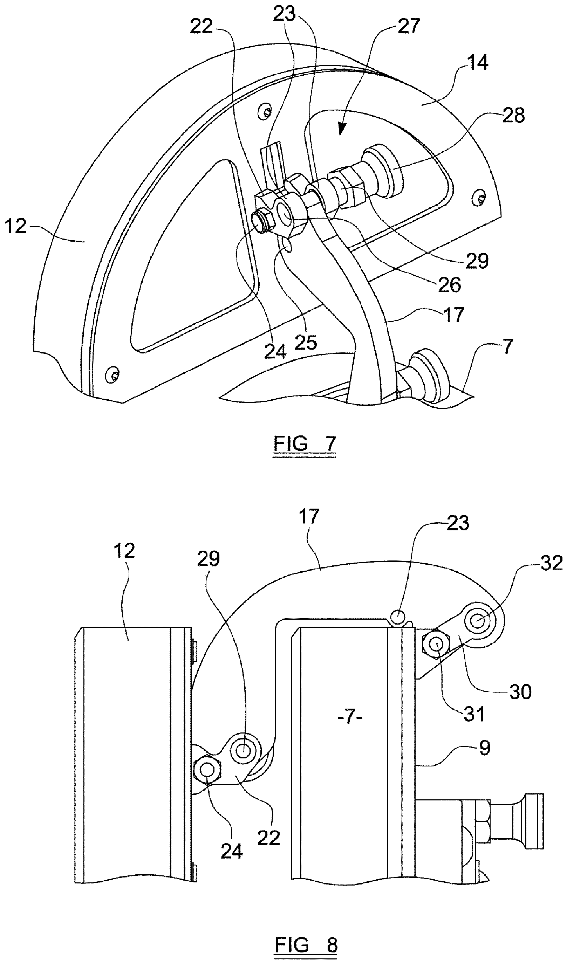

Figure 7 shows a close-up view of the rear side of the upper part 12 of the second cushion 11, in its deployed state. As previously discussed, an upper arm 17 connects the upper part 12 of the second cushion 11 to the first cushion 7.

An attachment projection 22 is fixed to the rear side of the back plate 14 of the upper part 12 of the second cushion 11. The attachment projection 22 comprises two spaced-apart plates 23, with part of the distal end 16 of the upper arm 17 being received between the plates 23. The spacing between the plates 23 is, preferably, around the same as, or slightly larger than, the width of the upper arm 17.

A hinge pin 24 passes through both of the plates, and also through a corresponding aperture (not visible in the figures) in the distal end 16 of the upper arm 17. The connection of the upper arm 17 to the plates 23 by way of the hinge pin 24 allows the plates 23 (and hence the upper part 12 of the second cushion 11) to pivot with respect to the upper arm 17.

The distal end 16 of the upper arm 17 also has first and second positioning holes formed there through. In figure 7, only the first positioning hole 25 is visible.

The first and second plates 23 of the connection projection 22 have connection apertures 26 formed there through. The connection apertures 26 in the two plates 23 are aligned or substantially aligned with each other.

A plunger 27 is carried on the attachment projection 22. The plunger 27 comprises a handle 28, which is of a suitable size and shape to be grasped and pulled easily by a user. The handle 28 is connected to a connection pin 29. The plunger 27 is arranged so that the connection pin 29 is aligned with the connection apertures 26 formed in the plates 23.

The handle 28 and connection pin 29 are spring-biased into a position in which the connection pin 29 passes through the connection apertures 26 in both of the plates 23. However, the handle 28 and connection pin 29 may be withdrawn, against the biasing force, so that the connection pin 29 is withdrawn from the connection apertures 26 in one of the plates 23, and does not obstruct the space between the plates 23.

In the arrangement shown in figure 7, the connection pin 29 passes through the second positioning aperture. It will be understood that the attachment projection 22 is therefore rotationally locked in place with respect to the upper arm 17, because these two components are joined to one another by the hinge pin 24, and also by the connection pin 29, at spaced-part locations. However, if the handle 28 is grasped and pulled so that the connection pin 29 is withdrawn from the space between the plates 23, the upper part 12 of the second cushion 11 will be free to pivot with respect to the upper arm 17.

Referring now to figure 8, a close up view of the upper part of figure 2 is shown. As can be seen in this figure, a further attachment projection 30 is attached to the upper rear side of the support plate 9 of the first cushion 7. In a similar manner to that shown in figure 7, the proximal end of the upper arm 17 is pivotally connected to further attachment projection 30 by a hinge pin 31, and has a further plunger mechanism, including a connection pin 32.

The proximal end of the upper arm 17 also has first and second positioning holes formed therethrough. Only the second positioning hole 33 is visible in figure 8.

The first positioning holes 25 of the proximal and distal ends of the upper arm 17 are positioned so that, when the plunger mechanisms are engaged with the first positioning holes 25, the upper part 12 of the second cushion 11 is held in the undeployed position, i.e. substantially directly in front of, and aligned with, the first cushion 7.

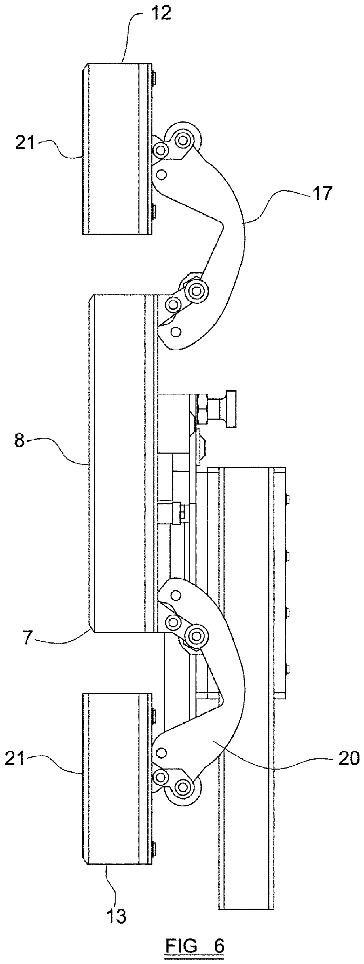

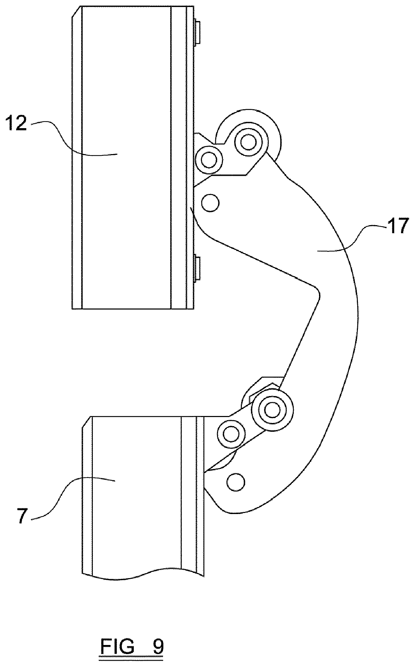

To move the upper part 12 of the second cushion 11 to the deployed position, the two plunger mechanisms are withdrawn, and re-engage with the second positioning holes 33 formed at the proximal and distal ends of the upper arm 17. The second positioning holes 33 are located so that, when the plunger mechanisms are engaged with the second positioning holes 33, the upper part 12 of the second cushion 11 is locked in the deployed position, i.e. substantially above, and generally coplanar with, the first cushion 7. This arrangement is shown in figure 9, which is a more close-up view of part of figure 6.

A similar arrangement is provided to allow the lower part 13 of the second cushion 11 to be moved between the undeployed and deployed configurations, and to be locked in place.

The use of plunger mechanisms as described above, and shown in figure 7, allows the cushion arrangement to be rapidly and conveniently transitioned between the two positions by an operator, without requiring the use of any tools, or needing large forces to be exerted. It will be readily apparent to an operator whether the various parts of the cushion mechanism are appropriately locked in place, because if a connection pin 29, 32 of a plunger mechanism is not properly engaged, the plunger 27 will remain withdrawn, and this will be visually immediately obvious to the operator.

The invention is not limited to the use of plungers of this type, however, and any suitable mechanism for allowing the cushion arrangement to be locked in both the undeployed and deployed configurations, and moved repeatedly between these configurations, may be used.

In the arrangement shown in the figures, a single first cushion is provided, along with a second cushion which is divided into upper and lower parts. However, the invention is not limited to this.

Arrangements in which the second cushion may comprises a single, unitary cushion are not independently claimed, but are useful for understanding the invention. In such an arrangement the second cushion is positioned in a plane in front of the first cushion in the undeployed configuration, and is moved to a deployed configuration in which the second cushion presents a front surface which is generally co-planar with the front surface of the first cushion. In an example of this type of embodiment, the second cushion may be generally circular, and in the undeployed configuration is held in front of and generally aligned with, the first cushion, for instance by one or more arms associated with plunger mechanisms, as described above. In the deployed configuration, the second cushion is moved to a position which is generally above or below the first cushion, so that the cushion arrangement presents two generally circular support surfaces, vertically spaced apart from one another. In such an example, one of these cushions may support a user's back, and the other may support the user's head.

The second cushion may also comprise more than two parts. For instance, the second cushion may be formed into three or four segments, and the skilled reader will readily understand how the principles discussed above may be adapted to provide this.

Embodiments where the second cushion is formed from more than two parts may be useful where a relatively large, distributed area of support is needed, for instance where a relatively wide or heavy wheelchair occupant must be accommodated.

In the example shown in the figures, the cross-sectional shape of the second cushion is, when the upper and lower parts of the second cushion are placed together, substantially the same as that of the first cushion. This does not need to be the case, however, and the shapes of the first and second cushions may be different from one another. In an example, the first cushion may be generally square, the lower part of the second cushion may be generally rectangular, and the upper part of the second cushion may be generally semi-circular. This means that, when cushion arrangement is in the deployed configuration, the first cushion and the lower part of the second cushion present large areas of support for a user's back, and the upper part of a second cushion provides a suitable shape to support the head of the user.

The skilled reader will appreciate that there are many other possibilities for the shape of the first and second cushions, and that these shapes may be selected depending upon the type of support that is required by particular users.

In the embodiments described above, the second cushion is attached to the first cushion. This is preferred, as it will help to ensure the alignment of the first and second cushions under a wide range of circumstances. However, it is also envisaged that the first and second cushions may independently be connected to one or more other structures, e.g. the support arm, without there being any direct connection between the first and second cushions.

While the examples above focus on systems for use in an ambulance, cushion arrangements embodying the invention may be used in any setting where the head and/or back of a user may be needed, including cars, vans, buses/coaches and other vehicles, sea craft such as ferries, hovercraft or yachts, and also in fixed settings such as schools, lecture halls, waiting rooms and stadium-type seating.

In the examples given above, the cushion arrangement is moved from one configuration to another manually. However, in other embodiments the cushion arrangement may be powered, and move automatically between the undeployed or stowed position and the deployed position. For instance, one or more electric motors can be included, which move the second cushion.

In such embodiments it is preferred that the cushion arrangement can be locked in the undeployed and/or deployed configuration. For examples, solenoid locking pins may be used to lock components selectively with respect to each other. The skilled reader will readily understand how this may be put into practice.

The controls for the powered movement of the cushion arrangement may be provided on or near the cushion arrangement itself. However, in preferred embodiments of this type, the movement of the cushion arrangement can be controlled from a position which is remote from the cushion arrangement, and in particular it may be possible to control the operation of the cushion arrangement through one or more switches or other controls which can be reached by a driver of the vehicle, e.g. located on the dashboard of the vehicle.

The skilled reader will appreciate that embodiments of the invention can provide robust and flexible support for vehicle occupants, whilst having a relatively simple construction and being straightforward to use by an inexperienced operator, without the need for any specialised tools.

When used in this specification and the claims, the term "comprises" and "comprising" and variations thereof mean that specified features, steps or integers and included. The terms are not to be interpreted to exclude the presence of other features, steps or compounds.

## Claims

1. A cushion arrangement (6), which is adapted to support the head and/or back of a wheelchair user within a vehicle, comprising:
a first cushion (7) having a planar or substantially planar support surface (8); and
a second cushion (11) having a planar or substantially planar support surface, the second cushion (11) being repeatedly movable between a first configuration and a second configuration, and may be selectively locked in the first configuration and the second configuration, wherein the second cushion (11) is formed in two parts each of which has a support surface (21) and which take the form of an upper part (12) and a lower part (13), and wherein:
in the first configuration, the support surface (21) of the second cushion (11) lies in a plane that is offset from that of the support surface (8) of the first cushion (7);
and
in the second configuration, the support surface (21) of the upper part (12) of the second cushion (11) lies above, and in the same or substantially the same plane as that of, the support surface (8) of the first cushion (7), and the support surface (21) of the lower part (13) of the second cushion (11) lies below, and in the same or substantially the same plane as the support surface (8) of, the first cushion (7) so that the first and second cushions (7, 11) present a front surface that is generally co-planar.

2. A cushion arrangement (6) according to claim 1 wherein, in the first configuration, the second cushion (11) lies in front of the first cushion (7), so that when the first cushion (7) is viewed along an axis which is substantially perpendicular to the plane of its support surface (8), the support surface (21) of the second cushion (11) at least partially overlaps the support surface (8) of the first cushion (7).

3. A cushion arrangement (6) according to claim 2 wherein, in the first configuration, when the first cushion (7) is viewed along an axis which is substantially perpendicular to the plane of its support surface (8), the support surface (21) of the second cushion (11) substantially completely partially overlaps the support surface (8) of the first cushion (7).

4. A cushion arrangement (6) according to claim 1 wherein, in the first configuration, the two parts (12, 13) abut each other so that the support surfaces (21) thereof are contiguous with each other and form the support surface (21) of the second cushion (11).

5. A cushion arrangement (6) according to claim 1 or 4 wherein, in the second configuration, the two parts (12, 13) are separate from each other, and the support surface (21) of each of the parts lies in the same or substantially the same plane that as that of the support surface (8) of the first cushion (7), and preferably wherein, in the second configuration, the two parts (12, 13) lie on generally opposite sides of the first cushion (7).

6. A cushion arrangement (6) according to any preceding claim, wherein the second cushion (11) is connected to the first cushion (7) by at least one support arm (17, 20).

7. A cushion arrangement (6) according to claim 6, wherein a first end of the support arm (17, 20) is attached to the first cushion (7), by a connection mechanism that allows the first end of the support arm to be rotationally locked in place with respect to the first cushion (7) in at least two different positions.

8. A cushion arrangement (6) according to claim 7 wherein, in a first of the two positions, the second cushion (11) is held in an appropriate position to be in the first configuration, and in a second of the two positions, the second cushion (11) is held in an appropriate position to be in the second configuration, and preferably wherein the connection mechanism includes a spring-biased connection pin (32), which may move between an engaged position and a withdrawn position, which is biased into the engaged position, and which may pass through either one of two connection holes (23) formed in the first end of the support arm (17, 20) to lock the support arm (17, 20) in the first and second positions, respectively.

9. A cushion arrangement (6) according to any one of claims 6 to 8, wherein a second end of the support arm (17, 20) is attached to the second cushion (11), by a connection mechanism that allows the second end of the support arm (17, 20) to be rotationally locked in place with respect to the second cushion (11) in at least two different positions.

10. A cushion arrangement (6) according to claim 9 wherein, in a first of the two positions, the second cushion (11) is held in an appropriate rotational orientation to be in the first configuration, and in a second of the two positions, the second cushion (11) is held in an rotational orientation to be in the second configuration.

11. A cushion arrangement (6) according to claim 10, wherein the connection mechanism includes a spring-biased connection pin (29), which may move between an engaged position and a withdrawn position, which is biased into the engaged position, and which may pass through either one of two connection holes (23) formed in the second end of the support arm (17, 20) to lock the support arm (17, 20) in the first and second positions, respectively.

12. A cushion arrangement (6) according to any one of claims 1 to 5, wherein the first and second cushions (7, 11) are independently connected to one or more supporting structures (1).

13. A vehicle having a cushion arrangement (6) according to any preceding claim installed therein.

14. A vehicle according to claim 13, wherein the cushion arrangement (6) is mounted on a support arm (4) which may move between a retracted position, in which the cushion arrangement (6) is held relatively close to an internal wall of the vehicle, and a deployed position, in which the cushion arrangement (6) is held further away from the internal wall of the vehicle, in an internal space within the vehicle.

## Patentansprüche

1. Eine Kissenanordnung (6), die dazu angepasst ist, den Kopf und/oder den Rücken eines Rollstuhlfahrers in einem Fahrzeug zu stützen, und die Folgendes umfasst:
ein erstes Kissen (7) mit einer ebenen oder im Wesentlichen ebenen Auflagefläche (8);
und
ein zweites Kissen (11) mit einer ebenen oder im Wesentlichen ebenen Auflagefläche, wobei das zweite Kissen (11) wiederholt zwischen einer ersten Anordnung und einer zweiten Anordnung beweglich ist, und gezielt in der ersten Anordnung und der zweiten Anordnung verriegelt werden kann, wobei das zweite Kissen (11) aus zwei Teilen gebildet ist, von denen jedes über eine Auflagefläche (21) verfügt, und wobei jeder Teil die Form eines oberen Teils (12) und eines unteren Teils (13) aufweist, und wobei:
in der ersten Anordnung die Auflagefläche (21) des zweiten Kissens (11) sich in einer Ebene erstreckt, die gegenüber derjenigen der Auflagefläche (8) des ersten Kissens (7) versetzt ist; und
in der zweiten Anordnung die Auflagefläche (21) des oberen Teils (12) des zweiten Kissens (11) über der Auflagefläche (8) des ersten Kissens (7) und in derselben oder im Wesentlichen derselben Ebene wie diese liegt, und die Auflagefläche (21) des unteren Teils (13) des zweiten Kissens (11) unter der Auflagefläche (8) des ersten Kissens (7) und in derselben oder im Wesentlichen derselben Ebene wie diese liegt, so dass das erste und das zweite Kissen (7, 11) eine Vorderseite aufweisen, die im Allgemeinen in der gleichen Ebene liegt.

2. Die Kissenanordnung (6) gemäß Anspruch 1, wobei in der ersten Anordnung das zweite Kissen (11) vor dem ersten Kissen (7) liegt, so dass, wenn das erste Kissen (7) entlang einer Achse betrachtet wird, die im Wesentlichen senkrecht zur Ebene seiner Auflagefläche (8) liegt, die Auflagefläche (21) des zweiten Kissens (11) die Auflagefläche (8) des ersten Kissens (7) zumindest teilweise überlappt.

3. Die Kissenanordnung (6) gemäß Anspruch 2, wobei, in der ersten Anordnung, wenn das erste Kissen (7) entlang einer Achse betrachtet wird, die im Wesentlichen senkrecht zu der Ebene seiner Auflagefläche (8) liegt, die Auflagefläche (21) des zweiten Kissens (11) die Auflagefläche (8) des ersten Kissens (7) im Wesentlichen vollständig teilweise überlappt.

4. Die Kissenanordnung (6) gemäß Anspruch 1, wobei, in der ersten Anordnung, die beiden Teile (12, 13) in so einer Weise aneinandergrenzen, dass deren Auflageflächen (21) zusammenhängen und die Auflagefläche (21) des zweiten Kissens (11) bilden.

5. Die Kissenanordnung (6) gemäß Anspruch 1 oder 4, **dadurch gekennzeichnet, dass**, in der zweiten Anordnung, die beiden Teile (12, 13) voneinander getrennt sind und die Auflagefläche (21) von jedem der Teile in der gleichen oder im Wesentlichen in der gleichen Ebene wie die Auflagefläche (8) des ersten Kissens (7) liegt, und wobei, in der zweiten Anordnung, die beiden Teile (12, 13) vorzugsweise im Allgemeinen auf gegenüberliegenden Seiten des ersten Kissens (7) liegen.

6. Die Kissenanordnung (6) gemäß einem der vorhergehenden Ansprüche, wobei das zweite Kissen (11) durch mindestens einen Tragarm (17, 20) mit dem ersten Kissen (7) verbunden ist.

7. Die Kissenanordnung (6) gemäß Anspruch 6, wobei ein erstes Ende des Tragarms (17, 20) durch einen Verbindungsmechanismus an dem ersten Kissen (7) befestigt ist, der es ermöglicht, das erste Ende des Tragarms in Bezug auf das erste Kissen (7) in zumindest zwei verschiedenen Positionen drehbar zu verriegeln.

8. Die Kissenanordnung (6) gemäß Anspruch 7, wobei in einer ersten der beiden Positionen das zweite Kissen (11) in einer geeigneten Position gehalten wird, um einen Teil der ersten Anordnung zu bilden, und, in einer zweiten der beiden Positionen, das zweite Kissen (11) in einer geeigneten Position gehalten wird, um einen Teil der zweiten Anordnung zu bilden, und wobei der Verbindungsmechanismus vorzugsweise einen federvorgespannten Verbindungsstift (32) aufweist, der sich zwischen einer eingerasteten und einer zurückgezogenen Position bewegen kann, der aber in die eingerastete Position vorgespannt ist, und der durch eines von zwei Verbindungslöchern (23), die an dem ersten Ende des Tragarms (17, 20) ausgebildet sind, hindurchstoßen kann, um den Tragarm (17, 20) in der ersten bzw. zweiten Position zu verriegeln.

9. Die Kissenanordnung (6) gemäß einem der Ansprüche 6 bis 8, wobei ein zweites Ende des Tragarms (17, 20) durch einen Verbindungsmechanismus an dem zweiten Kissen (11) befestigt ist, der es ermöglicht, das zweite Ende des Tragarms in Bezug auf das zweite Kissen (11) in zumindest zwei verschiedenen Positionen drehbar zu verriegeln.

10. Die Kissenanordnung (6) gemäß Anspruch 9, wobei, in einer ersten der beiden Positionen das zweite Kissen (11) in einer geeigneten Drehrichtung gehalten wird, um einen Teil der ersten Anordnung zu bilden, und, in einer zweiten der beiden Positionen, das zweite Kissen (11) in einer geeigneten Drehrichtung gehalten wird, um einen Teil der zweiten Anordnung zu bilden.

11. Die Kissenanordnung (6) gemäß Anspruch 10, wobei der Verbindungsmechanismus einen federvorgespannten Verbindungsstift (29) aufweist, der sich zwischen einer eingerasteten Position und einer zurückgezogenen Position bewegen kann, der aber in die eingerastete Position vorgespannt ist, und der durch eines von zwei Verbindungslöchern (23), die an dem zweiten Ende des Tragarms (17, 20) ausgebildet sind, hindurchstoßen kann, um den Tragarm (17, 20) in der ersten bzw. zweiten Position zu verriegeln.

12. Die Kissenanordnung (6) gemäß einem der Ansprüche 1 bis 5, wobei die ersten und zweiten Kissen (7, 11) unabhängig mit einer oder mehreren tragenden Strukturen verbunden sind (1).

13. Ein Fahrzeug mit einer Kissenanordnung (6) gemäß einem der vorangehenden Ansprüche, die darin eingebaut ist.

14. Das Fahrzeug gemäß Anspruch 13, wobei die Kissenanordnung (6) an einem Tragarm (4) angebracht ist, der sich zwischen einer zurückgezogenen Position, in der die Kissenanordnung (6) relativ nahe an einer Innenwand des Fahrzeugs gehalten wird, und einer ausgefahrenen Position, in der die Kissenanordnung (6) weiter von der Innenwand des Fahrzeugs entfernt gehalten wird, in einem Innenraum innerhalb des Fahrzeugs bewegen kann.

## Revendications

1. Agencement de coussin (6), qui est conçu pour soutenir la tête et/ou le dos d'un utilisateur de fauteuil roulant à l'intérieur d'un véhicule, comprenant :
un premier coussin (7) ayant une surface de support plane ou substantiellement plane (8) ; et
un deuxième coussin (11) ayant une surface de support plane ou substantiellement plane, le deuxième coussin (11) étant mobile de manière répétée entre une première configuration et une deuxième configuration, et pouvant être verrouillé sélectivement dans la première configuration et la deuxième configuration, où le deuxième coussin (11) est formé de deux parties dont chacune a une surface de support (21) et qui prend la forme d'une partie supérieure (12) et d'une partie inférieure (13), et où :
dans la première configuration, la surface de support (21) du deuxième coussin (11) se trouve dans un plan qui est décalé de celui de la surface de support (8) du premier coussin (7) ; et
dans la deuxième configuration, la surface de support (21) de la partie supérieure (12) du deuxième coussin (11) se trouve au-dessus de, et dans le même plan ou substantiellement le même plan que celui de la surface support (8) du premier coussin (7), et la surface de support (21) de la partie inférieure (13) du deuxième coussin (11) se trouve en dessous de, et dans le même plan ou substantiellement le même plan que la surface support (8) du premier coussin (7) de sorte que les premier et deuxième coussins (7, 11) présentent une surface frontale qui est coplanaire de manière générale.

2. Agencement de coussin (6) selon la revendication 1 où, dans la première configuration, le deuxième coussin (11) se trouve devant le premier coussin (7), de sorte que lorsque le premier coussin (7) est vu le long d'un axe qui est substantiellement perpendiculaire au plan de sa surface de support (8), la surface de support (21) du deuxième coussin (11) chevauche au moins partiellement la surface de support (8) du premier coussin (7).

3. Agencement de coussin (6) selon la revendication 2 où, dans la première configuration, lorsque le premier coussin (7) est vu le long d'un axe qui est substantiellement perpendiculaire au plan de sa surface de support (8), la surface de support (21) du deuxième coussin (11) chevauche substantiellement complètement en partie la surface de support (8) du premier coussin (7).

4. Agencement de coussin (6) selon la revendication 1 où, dans la première configuration, les deux parties (12, 13) viennent en butée l'une contre l'autre de sorte que les surfaces de support (21) de celles-ci soient contiguës l'une à l'autre et forment la surface de support (21) du deuxième coussin (11).

5. Agencement de coussin (6) selon la revendication 1 ou 4 où, dans la deuxième configuration, les deux parties (12, 13) sont séparées l'une de l'autre, et la surface de support (21) de chacune des parties se trouve dans le même ou substantiellement le même plan que celui de la surface de support (8) du premier coussin (7), et de préférence où, dans la deuxième configuration, les deux parties (12, 13) se trouvent de manière générale sur des côtés opposés du premier coussin (7).

6. Agencement de coussin (6) selon n'importe quelle revendication précédente, où le deuxième coussin (11) est raccordé au premier coussin (7) par au moins un bras de support (17, 20).

7. Agencement de coussin (6) selon la revendication 6, où une première extrémité du bras de support (17, 20) est attachée au premier coussin (7), par un mécanisme de raccordement qui permet à la première extrémité du bras de support d'être verrouillé en place de manière rotative par rapport au premier coussin (7) dans au moins deux positions différentes.

8. Agencement de coussin (6) selon la revendication 7 où, dans une première des deux positions, le deuxième coussin (11) est maintenu dans une position appropriée pour être dans la première configuration, et dans une deuxième des deux positions, le deuxième coussin (11) est maintenu dans une position appropriée pour être dans la deuxième configuration, et de préférence où le mécanisme de raccordement inclut une broche de raccordement sollicitée par ressort (32), qui peut se déplacer entre une position de mise en prise et une position de retrait, qui est sollicitée dans la position de mise en prise, et qui peut passer à travers soit l'un soit l'autre de deux trous de raccordement (23) formés dans la première extrémité du bras de support (17, 20) pour verrouiller le bras de support (17, 20) dans les première et deuxième positions, respectivement.

9. Agencement de coussin (6) selon n'importe lesquelles des revendications 6 à 8, où une deuxième extrémité du bras de support (17, 20) est attachée au deuxième coussin (11), par un mécanisme de raccordement qui permet à la deuxième extrémité du bras de support (17, 20) d'être verrouillée en place de manière rotative par rapport au deuxième coussin (11) dans au moins deux positions différentes.

10. Agencement de coussin (6) selon la revendication 9 où, dans une première des deux positions, le deuxième coussin (11) est maintenu dans une orientation de rotation appropriée pour être dans la première configuration, et dans une deuxième des deux positions, le deuxième coussin (11) est maintenu dans une orientation de rotation pour être dans la deuxième configuration.

11. Agencement de coussin (6) selon la revendication 10, où le mécanisme de raccordement inclut une broche de raccordement sollicitée par ressort (29), qui peut se déplacer entre une position de mise en prise et une position de retrait, qui est sollicitée dans la position de mise en prise, et qui peut passer à travers soit l'un soit l'autre de deux trous de raccordement (23) formés dans la deuxième extrémité du bras de support (17, 20) pour verrouiller le bras de support (17, 20) dans les première et deuxième positions, respectivement.

12. Agencement de coussin (6) selon n'importe laquelle des revendications 1 à 5, où les premier et deuxième coussins (7, 11) sont raccordés de manière indépendante à une ou plusieurs structures de support (1).

13. Véhicule ayant un agencement de coussin (6) selon n'importe quelle revendication précédente installé dans celui-ci.

14. Véhicule selon la revendication 13, où l'agencement de coussin (6) est monté sur un bras de support (4) qui peut se déplacer entre une position rétractée, dans laquelle l'agencement de coussin (6) est maintenu relativement proche d'une paroi interne du véhicule, et une position déployée, dans laquelle l'agencement de coussin (6) est maintenu en éloignement de la paroi interne du véhicule, dans un espace interne à l'intérieur du véhicule.
